Europäisches Patentamt

European Patent Office

Office européen des brevets

(19)

(11) Veröffentlichungsnummer: **0 253 000**
B1

# (12) EUROPÄISCHE PATENTSCHRIFT

(45) Veröffentlichungstag der Patentschrift:
24.01.90

(21) Anmeldenummer: 86109368.0

(22) Anmeldetag: 09.07.86

(51) Int. Cl.⁴: **F16P 3/12,** F16P 3/20

(54) Maschinenschutzschaltung.

(43) Veröffentlichungstag der Anmeldung:
20.01.88 Patentblatt 88/3

(45) Bekanntmachung des Hinweises auf die Patenterteilung:
24.01.90 Patentblatt 90/4

(84) Benannte Vertragsstaaten:
AT BE CH DE FR GB IT LI LU NL SE

(56) Entgegenhaltungen:
CH-A- 639 788
US-A- 4 054 935

(73) Patentinhaber: Tele-Security-Foto Überwachungsanlagen GmbH, Industriestrasse 18, D-6794 Brücken(DE)

(72) Erfinder: Jank, Wilhelm, Industriestrasse 18,
D-6794 Brücken(DE)
Erfinder: Scneider, Karl, Hauptstrasse 99,
D-6799 Herschweiler-Pettersheim(DE)

(74) Vertreter: Selting, Günther, Dipl.-Ing. et al,
Deichmannhaus am Hauptbahnhof, D-5000 Köln 1(DE)

## Beschreibung

Die Erfindung betrifft eine Maschinenschutzschaltung nach dem Oberbegriff des Patentanspruchs 1.

Es sind verschiedene Maschinenschutzschaltungen bekannt, die die Maschine abschalten, sobald eine Person durch die laufende Maschine gefährdet ist. Ein Beispiel hierfür sind Zweihandsicherheits-Relais, die es erfordern, zwei Drucktasten gleichzeitig zu drücken, um die Maschine in Betrieb zu halten (siehe z.B. US-A 4 054 935). Solche Zweihand-Sicherheitsrelais stellen sicher, daß sich beide Hände der Bedienungsperson auf den Drucktasten befinden, so daß die Bedienungsperson nicht mit einer Hand in die laufende Maschine greifen kann. Andere Sicherheitseinrichtungen bestehen aus Schiebegittern, die um die Maschine herum angeordnet sind und die einen Türkontakt aufweisen, welcher die Maschine stillsetzt, sobald das Gitter geöffnet wird (siehe beispielsweise CH-A 639 788).

Die bekannten Sicherheitseinrichtungen für Maschinen haben den Nachteil, daß sie starke Behinderungen für die Bedienungsperson bilden und dennoch häufig nicht zufriedenstellend arbeiten, insbesondere in Störungsfällen.

Der Erfindung liegt die Aufgabe zugrunde, eine Maschinenschutzschaltung nach dem Oberbegriff des Patentanspruchs 1 zu schaffen, die Annäherung von Personen an die Maschine mit Sicherheit erkennt und eine hohe Eigenfehlersicherheit hat.

Die Lösung dieser Aufgabe erfolgt erfindungsgemäß mit den Merkmalen des Patentanspruchs 1.

Nach der Erfindung ist im Gefährdungsbereich, der bei laufender Maschine nicht betreten werden darf, eine Kontaktmatte verlegt, die so lange ein elektrisches Signal liefert, wie sie von einer Person betreten wird. Zusätzlich ist ein dynamisch reagierender Sensor vorhanden, der Zustandsänderungen im Gefährdungsbereich erkennt. Solche Zustandsänderungen ergeben sich beispielsweise, wenn eine Person den Gefährdungsbereich betritt. In diesem Fall erzeugt der Sensor aufgrund der Zustandsänderung ein kurzzeitiges Signal, das zusätzlich zu dem Signal der Trittmatte ausgewertet wird. Wenn entweder die Trittmatte oder der dynamische Sensor anspricht (oder wenn beide gemeinsam ansprechen), wird der entsprechende Speicher gesetzt. Der Speicher behält den Setzzustand auch dann bei, wenn das auslösende Signal beendet worden ist. Die Sicherheitsschaltung kann durch jeden der beiden Speicher zum Stillsetzen der Maschine ausgelöst werden. Ein spezielles Merkmal der Erfindung besteht darin, daß die Einrichtungen, die das Betreten des Gefährdungsbereichs der Maschine erkennen, auf unterschiedlichen Funktionsprinzipien beruhen. Wenn die Umwelteinflüsse infolge irgendwelcher Ereignisse eine der Erkennungseinrichtungen unwirksam machen, bleibt die andere Erkennungseinrichtung in Funktion. Entsprechendes gilt auch, wenn die Empfindlichkeit einer Erkennungseinrichtung aus irgendwelchen Gründen vorübergehend verringert ist. In diesen Fällen sorgt die andere Erkennungseinrichtung dafür, daß eine ordnungsgemäße Abschaltung erfolgt.

Der auf Zustandsänderungen reagierende (dynamische) Sensor ist vorzugsweise eine Sensormatte, die aus mehreren Kunststoffschichten besteht. Wenn eine solche Sensormatte einem Druck ausgesetzt wird, erfolgen Verschiebungen elektrischer Ladungsträger, so daß an einer Elektrode, die mit einer der Kunststoffschichten verbunden ist, eine Potentialänderung festgestellt werden kann. Eine solche Sensormatte hat den Vorteil, daß sie auf statische Belastungen nicht reagiert. Beispielsweise kann auf sie die Maschine selbst oder eine in der Nähe der Maschine benötigte Einrichtung gestellt werden, ohne daß ein Signal erzeugt wird, solange der betreffende Gegenstand nicht bewegt wird. Eine solche Sensormatte eignet sich daher insbesondere für den Nahbereich der Maschine. Es ist möglich, die Maschine selbst oder andere Teile auf die Sensormatte zu stellen. Die Kontaktmatte, die normalerweise keiner Belastung ausgesetzt sein darf, eignet sich eher für die Überwachung des weiteren Umfeldes der Maschine. Grundsätzlich können sich zwar beide Matten (Kontaktmatte und dynamische Sensormatte) überlappen oder überlagern, jedoch können beide Matten auch derart ineinandergeschachtelt sein, daß sie sich nicht überlappen, wobei die eine Matte die andere umgibt.

Mit den Merkmalen des Anspruchs 3 wird erreicht, daß die Relais stromdurchflossen sind, solange keine der Erkennungseinrichtungen angesprochen hat und die Maschine weiterlaufen soll. Bei Ausfall eines Relais oder bei einem Defekt in der Maschinenschutzschaltung wird das betreffende Relais aberregt, weil das vom Speicher kommende Haltesignal für dieses Relais dann ausbleibt. Die Schaltung hat daher eine hohe Eigenfehlersicherheit, weil sie die Maschine nicht nur bei Ansprechen einer Erkennungseinrichtung, sondern auch bei Auftreten eines Defekts, eines Leitungsbruchs oder Kurzschlusses abschaltet.

Das Einschalten der Maschine bei Arbeitsbeginn oder das Wiedereinschalten nach einer Maschinenabschaltung erfolgt zweckmäßigerweise nur unter der Voraussetzung, daß ein Rücksetzschalter betätigt wird. Mit den Merkmalen des Anspruchs 5 wird erreicht, daß ein Rücksetzschalter zum Rücksetzen der Speicher nur dann wirksam werden kann, wenn die Speicher zuvor gesetzt worden sind und sich noch im Setzzustand befinden. Darüberhinaus bewirken die Merkmale des Anspruchs 6, daß eine Einschaltung der Maschine mit Hilfe des Rücksetzschalters nur möglich ist, wenn sich keine Person in der Nähe der Maschine aufhält.

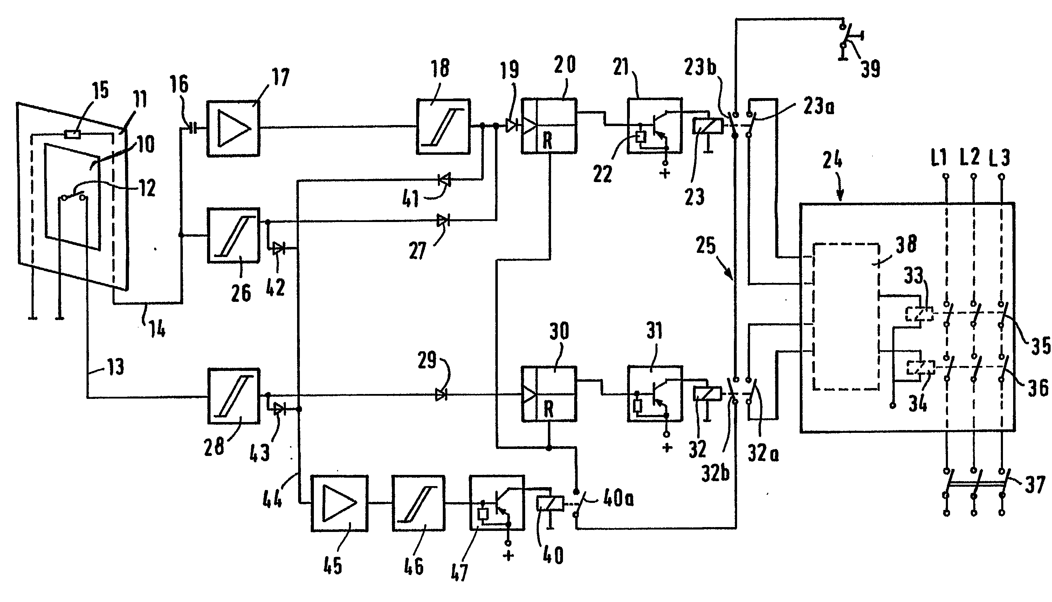

Im folgenden wird unter Bezugnahme auf die einzige Figur der Zeichnung ein Ausführungsbeispiel der Erfindung näher erläutert.

In der Zeichnung ist ein Blockschaltbild der Maschinenschutzschaltung dargestellt.

Im Bereich der (nicht dargestellten) Maschine, z.B. einer Presse oder einer anderen Werkzeug- oder Verarbeitungsmaschine, sind auf dem Fußboden eine Kontaktmatte 10 und eine Sensormatte 11 verlegt, die zu einer Trittmatte vereinigt sind. Die Kontaktmatte 10 besteht aus zwei Leiterbahnen, die elektrisch gegeneinander isoliert sind, jedoch miteinander in Kontakt kommen, wenn sie durch eine Last zusammengedrückt werden, was durch das Schaltersymbol 12 angedeutet ist. Die Ausgangsleitung 13 der Kontaktmatte 10 wird an Massepotential gelegt, wenn die Kontaktmatte 10 belastet wird.

Außer der Kontaktmatte 10 ist im Gefährdungsbereich die Sensormatte 11 verlegt, die aus mehreren aufeinanderliegenden Kunststoffbahnen besteht, von denen eine an Massepotential liegt und während die Ausgangsleitung 14 zu der Überwachungsschaltung führt. Die äußeren Folien des Folienpakets sind mit einer Metallbeschichtung versehen und beide Metallbeschichtungen sind durch einen hochohmigen Widerstand 15 miteinander verbunden.

Die Kontaktmatte 10 und die Sensormatte 11 bilden eine gemeinsame Trittmatte, die zum Erreichen der Maschine zwingend betreten werden muß und nicht übersprungen werden kann. Die Trittmatte ist so breit, daß ein rechtzeitiger Stillstand der Maschine sichergestellt ist, so daß eine Person, die die Trittmatte betritt, nicht in die noch laufende Maschine greifen kann.

Das Signal der Ausgangsleitung 14 der Sensormatte 11 wird über einen Kondensator 16 und einen Impedanzwandler 17 einen Schwellwertschalter 18 zugeführt, der ein Ausgangssignal erzeugt, wenn das Signal der Sensormatte einen vorbestimmten Schwellenwert übersteigt. Der Ausgang des Schwellwertschalters 18 ist über eine Diode 19 mit dem Eingang des ersten Speichers 20 verbunden, der als Flip-Flop ausgebildet ist. Das Eingangssignal wird dem dynamischen Eingang des Flip-Flops zugeführt, das bei Empfang eines Impulses in den Setzzustand kippt und durch ein Signal an seinem Rücksetzeingang R rückgesetzt werden kann. Der Ausgang des Flip-Flops 20 ist mit der Treiberschaltung 21 verbunden, bei der es sich um eine Transistorschaltung handelt, deren Aufbau nicht im einzelnen angegeben ist. Die Treiberschaltung 21 enthält einen Widerstand 22, über den ihre Eingangsleitung mit dem Pluspol der Versorgungsspannung verbunden wird. Auf diese Weise wird erreicht, daß der Eingang der Treiberschaltung 21 sets auf Pluspotential liegt, wenn er nicht vom Ausgang des Speichers 20 zwangsweise auf ein anderen Potential gelegt wird. Bei dem vorliegenden Ausführungsbeispiel entspricht positives Potential einem logischen "1"-Signal, während Massepotential logischem "0"-Signal entspricht. Der Ausgang der Treiberschaltung 21 steuert das Relais 23. In der Zeichnung sind sämtliche Relaiskontakte im Ruhezustand, also bei aberregten Relais, dargestellt. Das Relais 23 weist einen (bei erregtem Relais geschlossenen) Arbeitskontakt 23a auf und einen (bei erregtem Relais geöffneten) Ruhekontakt 23b. Der Arbeitskontakt 23a liegt in einem Stromkreis, der Sicherheitsschaltung 24 und der Ruhekontakt 23b liegt in einer Reihenschaltung 25.

Das Signal der Ausgangsleitung 14 der Sensormatte 11 wird ferner über einen zweiten Schwellwertschalter 26 und eine Diode 27 der Anode der Diode 19 zugeführt, welche mit dem Eingang des Speichers 20 verbunden ist. Die Ansprechschwelle des Schwellwertschalters 26 liegt höher als diejenige des Schwellwertschalters 18. Der Schwellwertschalter 26 spricht bei einem durch Betreten der Trittmatte erzeugten Signal nicht an, sondern reagiert auf Kurzschluß und Unterbrechung der Ausgangsleitung 14, z.B. als Folge von Sabotage. Er überwacht, ob die Spannung an Leitung 14 innerhalb eines Spannungsfensters liegt, das einen unteren und einen oberen Grenzwert hat.

Das Signal der Ausgangsleitung 13 der Kontaktmatte 10 wird einem Schwellwertschalter 28 zugeführt, dessen Ausgang über eine Diode 29 mit dem Eingang des Speichers 30 verbunden ist. Der Speicher 30 ist in gleicher Weise ausgebildet wie der Speicher 20. Sein Ausgang ist mit der Treiberschaltung 31 verbunden, die in gleicher Weise ausgebildet ist wie die Treiberschaltung 21 und die das Relais 32 steuert. Das Relais 32 weist einen Arbeitskontakt 32a auf, der in einem Stromkreis der Sicherheitsschaltung 24 liegt, und einen Ruhekontakt 32b, der in der Reihenschaltung 25 enthalten ist.

Die Sicherheitsschaltung 24 ist ein handelsübliches Zweihand-Sicherheitsrelais, das die Versorgungsleitungen L1,L2 und L3 der Maschine unterbrechen kann. Zu diesem Zweck weist die Sicherheitsschaltung 24 zwei Relais 33 und 34 auf, von denen jedes im erregten Zustand einen dreipoligen Netzschalter 35 bzw. 36 schließt. Der manuell zu betätigende Hauptschalter 37 der Maschine liegt zwischen der Sicherheitsschaltung 24 und der Maschine. Die Sicherheitsschaltung 24 weist eine Steuerelektronik 38 auf, die durch den jeweiligen Zustand der Arbeitskontakte 23a und 32a gesteuert wird und die ihrerseits die Relais 33 und 34 steuert. Damit die Relais 35 und 36 die Maschine an die Versorgungsleitungen L1,L2 und L3 anschließen, müssen die Arbeitskontakte 23a und 32a, die bei einem Zweihand-Sicherheitsrelais von Hand betätigt werden, innerhalb von 0,5 Sekunden, also annähernd gleichzeitig, geschlossen werden. Sobald mindestens einer der Arbeitskontakte geöffnet wird, bewirkt die Sicherheitsschaltung 24 das Abschalten der Maschine.

Die Reihenschaltung 25, die die Ruhekontakte 23b und 32b in Reihe enthält, ist über den manuell zu betätigenden Rücksetzschalter 39 mit Massepotential verbindbar. Die Reihenschaltung ist über den Arbeitskontakt 40a des weiteren Relais 40 mit den Rücksetzeingängen R der beiden Speicher 20 und 30 verbunden, so daß diese Speicher rückgesetzt werden, wenn bei Betätigung des Rücksetzschalters 39 die Kontakte 23b,32b und 40a sämtlich geschlossen sind.

Die Ausgänge der Schwellwertschalter 18,26 und 28 sind über je eine Diode 41,42 bzw. 43 mit einer gemeinsamen Leitung 44 verbunden, die zum Eingang eines Impedanzwandlers 45 führt. Das Ausgangssignal des Impedanzwandlers 45 steuert über den Schwellwertschalter 46 und die Treiberschaltung 47, die in gleicher Weise ausgebildet ist, wie die Treiberschaltung 21, das Relais 40.

Die beschriebene Maschinenschutzschaltung arbeitet wie folgt:

Ein durch Druckänderung an der Sensormatte 11 erzeugter Spannungsimpuls gelangt über den Kondensator 16 und den Impedanzwandler 17 zum Schwellwertschalter 18, der daraufhin einen Rechteckimpuls erzeugt. Dadurch, daß dem Speicher 20 über die Diode 19 ein Impuls zugeführt wird, wird dieser Speicher gesetzt, d.h. an seinem Ausgang entsteht ein "1"-Signal. Der Speicher 20 hält den Setzzustand bei, bis er an seinem Rücksetzeingang R Massepotential empfängt. Das Relais 23 ist erregt, solange am Ausgang des Speichers 20 "0"-Signal ansteht; wird der Speicher 20 dagegen gesetzt, dann steht an seinem Ausgang "1"-Signal, wodurch das Relais 23 abfällt. Da der Eingang der Treiberschaltung 21 über den Widerstand 22 auf "1"-Signal gezogen wird, wenn am Ausgang des Speichers 20 kein "0"-Signal ansteht, fällt das Relais 23 auch dann ab, wenn eine der Zuleitungen oder Versorgungsleitungen der der Treiberschaltung 21 vorgeschalteten Komponenten unterbrochen ist. Das Relais 23 fällt somit immer dann ab, wenn durch die Sensormatte 11 ein Spannungsimpuls erzeugt wurde, oder wenn eine Zuleitung unterbrochen oder kurzgeschlossen wurde.

Ein durch statischen Druck erzeugter Kurzschluß an der Kontaktmatte 10 führt zu einem "1"-Signal am Ausgang der Schwellwertschaltung 28. Hierdurch wird der Speicher 30 gesetzt und der Treiber 31 macht das Relais 32 stromlos. Das Relais 32 fällt also immer dann ab, wenn durch die Kontaktmatte 10 ein Kurzschluß erzeugt wird oder wenn die Zuleitung zur Kontaktmatte unterbrochen wurde.

Wenn mindestens eines der Relais 23 oder 32 abfällt, schaltet die Sicherheitsschaltung 24 die Maschine ab. Die Sicherheitsschaltung verbindet die Maschine nur dann mit den Versorgungsleitungen L1,L2 und L3, wenn beide Relais 23 und 32 erregt sind. Dies ist nur dann der Fall, wenn die Trittmatte, die aus der Kontaktmatte 10 und der Sensormatte 11 besteht, nicht betreten wurde und die Signalleitungen fehlerfrei sind. Wenn an dem Ausgang eines Schwellwertschalters ein "1"-Signal auftritt, wird die Maschine durch die Sicherheitsschaltung 24 unverzüglich abgeschaltet und bleibt wegen der Funktion der Speicher 20 und 30 abgeschaltet.

Das Wiedereinschalten ist nur durch Betätigung des Rücksetzschalters 39 möglich, der vorzugsweise als Schlüsselschalter ausgebildet ist. Voraussetzung für das Wiedereinschalten ist, daß beim Betreten der Trittmatte 10,11 beide Relais 23 und 32 abgefallen sind und daß die Trittmatte zum gegenwärtigen Zeitpunkt nicht mehr belastet ist. Dies wird durch den Schwellwertschalter 46 geprüft, der über die aus den Dioden 41,42 und 43 bestehende ODER-Schaltung kein Signal empfängt, wenn die Trittmatte entlastet ist. Nur in diesem Fall wird über die Treiberschaltung 47 das Relais 40 erregt, so daß das Rücksetzsignal vom Rücksetzschalter 39 über die geschlossenen Kontakte 23b, 32b und 40a zu den Rücksetzeingängen R der Speicher 20 und 30 gelangen kann. Nur dann ist ein Wiedereinschalten der Maschinenschutzschaltung und eine erneute Inbetriebnahme der Maschine möglich.

Beim Einschalten der Stromversorgung der Maschine wird zunächst der Hauptschalter 37 geschlossen. Gleichzeitig werden die Speicher 20 und 30 gesetzt, so daß die Relais 23 und 32 stromlos sind. Die Maschine bleibt also zunächst abgeschaltet. Zum Einschalten ist es erforderlich, den Rücksetzschalter 39 zu betätigen, wodurch die Speicher 22 und 30 rückgesetzt wurden, sofern das Relais 40 angezogen hat. Die Maschine wird also nur dann eingeschaltet, wenn beide Speicher 20 und 30 durch das Rücksetzsignal rückgesetzt werden und über die zugehörigen Treiber 21 bzw. 31 die Relais 23 und 32 erregt sind, wenn also die Elektronik beim Zurücksetzen fehlerfrei funktioniert. Damit wird bei jedem Einschalten der Maschinenschutzschaltung ein Selbsttest der Elektronik durchgeführt. Ein Ausfall der Stromversorgung bei dem Gerät führt zum Abfallen der Relais und somit zur sofortigen Abschaltung der Maschine.

Tritt bereits beim Einschalten der Maschinenschutzschaltung ein Fehler auf, gehen also nicht die Ausgänge beider Speicher 20 und 30 auf "1", bzw. zieht eines der beiden Relais 23,32 fälschlicherweise an, dann ist der Rücksetzvorgang nicht möglich. Weiterhin schaltet die Maschine dann nicht ein, wenn durch das Rücksetzsignal nicht beide Speicher rückgesetzt worden sind. Dadurch ist doppelte Sicherheit gegeben. Der Ausfall einer der beiden Matten 10,11 oder der zugehörigen Verarbeitungskomponenten führt dazu, daß die Maschine sich nicht einschalten läßt.

Tritt beim Betreten der Trittmatte 10,11 ein Fehler auf, d.h. werden durch das Betreten nicht beide Speicher 20 und 30 gesetzt, bzw. fallen nicht beide Relais 23 und 32 ab, so genügt zum Abschalten der Maschine auf jeden Fall die Funktion der einen Signalgruppe, d.h. es ist für die Abschaltung ausreichend, wenn ein Relais abfällt. Ein Wiedereinschalten ist in einem solchen Fall nicht mehr möglich. Auch bei Betreten der Trittmatte ist also doppelte Sicherheit gegeben.

**Patentansprüche**

1. Maschinenschutzschaltung zum Abschalten einer Maschine bei Eintritt einer Person in den Gefährdungsbereich der Maschine, mit einer Sicherheitsschaltung (24), die mindestens zwei Bedingungen überwacht, welche gemeinsam erfüllt sein müssen, damit ein Maschinenschalter (35,36) einschaltbar ist bzw. in Betrieb bleibt, **dadurch gekennzeichnet,** daß im Gefährdungsbereich auf dem Boden eine Kontaktmatte (10) verlegt ist, die während der Zeit ihres Betretens ein Dauersignal liefert, daß zusätzlich der Gefährdungsbereich durch einen nur auf Zustandsänderungen reagierenden Sensor überwacht ist, daß das Signal des Sensors einem ersten Speicher (20) und dasjenige der Kontaktmatte (10) einem zweiten Speicher (30) zugeführt wird und daß die in diesen Speichern gespeicherten Signale die Sicherheitsschaltung (24) steuern.

2. Maschinenschutzschaltung nach Anspruch 1, dadurch gekennzeichnet, daß der Sensor aus einer elektrisch auf Druckänderungen reagierenden Sensormatte (11) aus mehreren Kunststoffschichten besteht.

3. Maschinenschutzschaltung nach Anspruch 1 oder 2, dadurch gekennzeichnet, daß jedem Speicher (20,30) eine ein Relais (23,32) steuernde Treiberschaltung (21,31) nachgeschaltet ist und daß die Treiberschaltung derart geschaltet ist, daß sie das Relais stromlos macht, wenn in der Speicherschaltung ein Signal gespeichert ist oder eine Leitungsunterbrechung vor der Treiberschaltung (21,31) erfolgt ist.

4. Maschinenschutzschaltung nach einem der Ansprüche 1 bis 3, dadurch gekennzeichnet, daß jedem Speicher (20,30) ein Relais (23,32) nachgeschaltet ist und daß erste Kontakte (23a,32a) dieser Relais in Stromkreisen der Sicherheitsschaltung (24) liegende Arbeitskontakte sind.

5. Maschinenschutzschaltung nach Anspruch 4, dadurch gekennzeichnet, daß zweite Kontakte (23b,32b) der Relais (23,32) Ruhekontakte sind, die bei erregtem Relais öffnen, daß die zweiten Kontakte (23b,32b) aller Relais (23,32) in eine Reihenschaltung (25) mit einem manuell zu betätigenden Rücksetzschalter (39) geschaltet sind und daß über die Reihenschaltung (25) ein Rücksetzsignal für die Speicher (20,30) übertragbar ist.

6. Maschinenschutzschaltung nach Anspruch 5, dadurch gekennzeichnet, daß die Reihenschaltung (25) einen weiteren Kontakt (40a) enthält, der von den Ausgangssignalen der Kontaktmatte (10) und des Sensors derart gesteuert ist, daß er nur dann leitend ist, wenn keines dieser Ausgangssignale ansteht.

7. Maschinenschutzschaltung nach einem der Ansprüche 1 bis 6, dadurch gekennzeichnet, daß die Signale des Sensors dem zugehörigen Speicher (20) über einen nur Wechselspannungssignale übertragenden ersten Kanal und über einen Gleichspannungssignale übertragenden zweiten Kanal zugeführt werden.

**Claims**

1. A machine protective circuit for switching off a machine upon entry of a person into the danger zone of said machine, comprising a safety circuit (24) monitoring at least two conditions that have to be commonly fulfilled to enable a machine switch (35, 36) to be switched on or to remain operative, characterized in that a contact mat (10) is laid on the floor in said danger zone, which mat provides a permanent signal over the time of its being stepped on, in that the danger zone is additionally monitored by a sensor which only reacts to changes of state, in that the signal of said sensor is supplied to a first memory (20) and that of said contact mat (10) is supplied to a second memory (30), and in that the signals stored in said memories control said safety circuit (24).

2. The machine protective circuit according to claim 1, characterized in that said sensor consists of a sensor mat (11) of a plurality of plastic material layers, which is electrically responsive to pressure changes.

3. The machine protective circuit according to claim 1 or 2, characterized in that a driver circuit (21, 31) controlling a relay (23, 32) is connected after each memory (20, 30) and in that said driver circuit is connected such that it de-energizes said relay if a signal is stored in said memory circuit or if an interruption of the line before said driver circuit (21, 31) has occurred.

4. The machine protective circuit according to one of claims 1 to 3, characterized in that a relay (23, 32) is connected after each memory (20, 30) and in that first contacts (23a, 32a) of said relays are normally open contacts arranged within electric loops of said safety circuit (24).

5. The machine protective circuit according to claim 4, characterized in that second contacts (23b, 32b) of said relays (23, 32) are normally closed contacts that open upon excitation of said relay, in that said second contacts (23b, 32b) are connected in a series connection (25) with a manually operated reset switch (39) and in that a reset signal for said memories (20, 30) can be transmitted via the reset circuit (25).

6. The machine protective circuit according to claim 5, characterized in that said reset circuit (25) includes a further contact (40a) that is controlled by the output signals of said contact mat (10) and said sensor such that it is conductive only if none of said output signals is present.

7. The machine protective circuit according to one of claims 1 to 6, characterized in that the signals of said sensor are supplied to the associated memory (20) via a first channel transmitting only AC-signals and via a second channel transmitting DC-signals.

**Revendications**

1. Circuit de protection pour machine, pour mettre une machine hors circuit lors de l'entrée d'une personne dans la zone de risque de la machine, comportant un circuit de sécurité (24) qui surveille au moins deux conditions qui doivent être remplies conjointement pour qu'un interrupteur (35, 36) de la machine puisse être mis en circuit ou reste en service, caractérisé en ce que dans la zone de risque, sur le sol, est posé un tapis à contact (10) qui fournit un signal permanent pendant tout le temps où l'on y marche, en ce qu'en outre la zone de risque est surveillée par un détecteur qui ne réagit qu'à des modifications d'état, en ce que le signal du détecteur est amené à une première mémoire (20) et celui du tapis à contact (10), à une deuxième mémoire (30), et en ce que les signaux mémorisés dans ces mémoires commandent le circuit de sécurité (24).

2. Circuit de protection pour machine selon la revendication 1, caractérisé en ce que le détecteur est constitué d'un tapis détecteur (11), formé de plusieurs couches de plastique, réagissant électriquement aux modifications de pression.

3. Circuit de protection pour machine selon la revendication 1 ou 2, caractérisé en ce qu'après chaque mémoire (20, 30) est monté un circuit pilote (21, 31) qui commande un relais (23, 32) et en ce que le circuit pilote est disposé de façon à mettre le relais hors tension lorsqu'un signal est mémorisé dans le circuit mémoire ou lorsqu'il se produit une coupure de circuit en amont du circuit pilote (21, 31).

4. Circuit de protection pour machine selon l'une des revendications 1 à 3, caractérisé en ce qu'après chaque mémoire (20, 30) est monté un relais (23, 32) et en ce que les premiers contacts (23a, 32a) de ces relais sont des contacts de travail situés sur les circuits du circuit de sécurité (24).

5. Circuit de protection pour machine selon la revendication 4, caractérisé en ce que les seconds contacts (23b, 32b) des relais (23, 32) sont des contacts de repos qui s'ouvrent par excitation de relais, en ce que les seconds contacts (23b, 32b) de tous les relais (23, 32) sont disposés dans un circuit de série (25) comprenant un interrupteur de désactivation (39) à manœuvrer manuellement et en ce qu'un signal de désactivation pour les mémoires (20, 30) peut être transmis par l'intermédiaire du circuit de série (25).

6. Circuit de protection pour machine selon la revendication 5, caractérisé en ce que le circuit de série (25) contient un autre contact (40a) qui est commandé, par les signaux de sortie du tapis à contact (10) et du détecteur de façon telle qu'il n'est conducteur qu'en l'absence de l'un et l'autre de ces signaux de sortie.

7. Circuit de protection pour machine selon l'une des revendications 1 à 6, caractérisé en ce que les signaux du détecteur sont envoyés à la mémoire correspondante (20) par l'intermédiaire d'un premier canal qui ne transmet que les signaux de tension alternative et par l'intermédiaire d'un second canal qui transmet les signaux de tension continue.